# EUROPEAN PATENT APPLICATION

(11) **EP 4 418 383 A1**
(43) Date of publication of application: **21.08.2024**
(21) Application number: 23217450.8
(22) Date of filing: 18.12.2023
(51) Int. Cl.: H01M 10/04, H01M 10/0587

(54) **PROCESSING LINE OF ELECTROCHEMICAL CELLS**

(30) Priority: 15.02.2023 IT 202300002550; 15.02.2023 IT 202300002568; 15.02.2023 IT 202300002562
(71) Applicant: G.D S.p.A., 40133 Bologna (BO) (IT)
(72) Inventor: VILLA, Stefano, I-40133 Bologna (BO) (IT); FORTINI, Massimo, I-40133 Bologna (BO) (IT); LUZI, Luca, I-40133 Bologna (BO) (IT)
(74) Representative: Porta & Consulenti Associati S.p.A.

(57) **Abstract**

Processing line and method of electrochemical cells (30) wherein it is provided to:
- move step-wise a plurality of seats (25) along a transport path (20) according to an advancement direction A with a movement step P and according to a time interval T between one movement step P and the other, wherein the time interval T is defined by a movement time Tm and a stop time Ts; wherein said seats (25) are equidistant from each other and spaced according to a predetermined spacing step D along at least one active sector (21) of the transport path (20) and wherein the movement step P corresponds to N times the predetermined spacing step D;
- during the step-wise movement of said plurality of seats (25), in the stop time Ts: stopping N seats (25) at a time of said plurality of seats (25) in a working area (22) defined along the active sector (21) of the transport path (20) to perform a same operation simultaneously on N electrochemical cells (30) transported by the N seats (25) stopped in the working area (22);
- during the step-wise movement of said plurality of seats (25), in the stop time Ts: stopping N seats (25) at a time of said plurality of seats (25) in a deposition area (23) defined along the active sector (21) of the transport path (20) upstream of the working area (22) with respect to the advancement direction A, and placing, one after the other, N electrochemical cells (30) in N different positions (P1, P2, P3) at the N seats (25) stopped in the deposition area (23).

## Description

The present invention relates to a processing line of electrochemical cells and an associated method.

In particular, the present invention relates to electrochemical cells for the production of secondary-type electric batteries, also called rechargeable batteries, which may be charged and discharged several times.

Such rechargeable batteries are commonly used for portable electronics, electric vehicles, industrial, military and aerospace applications.

Examples of such batteries are lithium-ion rechargeable batteries, nickelcadmium rechargeable batteries and nickel-metal hydride rechargeable batteries.

In some types of applications, electric batteries comprise a hollow container with an inner cavity within which an electrochemical cell, consisting of two electrodes (an anode and a cathode) and a separator placed between the two electrodes, is inserted. One electrode is electrically connected to a base bottom of the container and the other electrode is electrically connected to a top plate of the container.

In such applications, the electrochemical cell inserted into the hollow container may be an electrochemical cell of the jelly roll or Swiss roll type wherein the separator and electrodes are wound in a spiral to form a cylinder-shaped electrochemical cell that is inserted into the container cavity. An electrode of the cell thus formed is placed in electrical contact with an electric pole placed on the bottom of the hollow container. The other electrode is placed in electrical contact with a cap, which is placed over the container and creates an additional electrical pole.

The Applicant has observed that in the process of forming a jelly roll, as a result of the aforementioned spiral winding of the separator and electrodes, a portion of separator having a typically S-shaped cross-section is created within a through-hole in the jelly roll. This portion of separator within the through-hole can hinder subsequent welding operations aimed at welding the electrode to the bottom of the container. In fact, in the Applicant's experience, the welding of the electrode on the container bottom is carried out by inserting a welding device into the through-hole of the jelly roll.

As, for example, disclosed in KR101726381, it is known in the art to perform a reforming operation adapted to reposition a portion of the separator, which is created within a through-hole of a jelly roll as a result of the jelly roll forming process, against the inner walls of the through-hole; this operation being performed by inserting a previously heated reforming needle into the through-hole.

The Applicant noted that various types of operations are carried out in a processing line of electrochemical cells, such as, for example, the building of the electrochemical cells (e.g. of the jelly roll type); a reforming operation (e.g. in the case of electrochemical cells of the jelly roll type); a possible operation for inserting into the through-hole of jelly roll-type electrochemical cells a hollow cylinder that is adapted to protect the inner walls of the through-hole during a subsequent welding process requiring the insertion of a welding device into the through-hole of the jelly roll; an operation for writing data on an outer surface of the electrochemical cell; an operation for checking and verifying written data; operations for checking electrical resistors between various elements of the electrochemical cell; checking and rejecting electrochemical cells which are deemed as inadequate, and the like.

The Applicant also noted that in a processing line of electrochemical cells in which the various operations are carried out by stations placed one after the other, it would be useful if the stations all had the same cycle time so that each station could be fed directly with the electrochemical cells leaving an immediately upstream station and such as to create a compact processing.

However, the Applicant noted that there may be a "slower" station performing an operation that requires execution times on each electrochemical cell that are generally longer than the operations performed by an immediately upstream station. In such cases, the "slower" station will have a cycle time greater than the cycle time of the immediately upstream station.

In order to avoid increasing the processing times of the line by adjusting the cycle time of the upstream station to that of the "slower" station, the aforementioned difference in execution times would require the presence of a buffer between the two stations to compensate for the different execution times. However, this would adversely affect the overall dimensions and costs of the processing line.

In this context, the Applicant perceived the need to make it possible to devise a processing line having a simple structure combined with short processing times, limited space and costs.

The present invention therefore relates, in a first aspect thereof, to a processing line of electrochemical cells.

Preferably, the processing line comprises a first station and a movement device.

Preferably, the first station has a first apparatus.

Preferably, the first apparatus comprises a conveyor moving step-wise along a transport path according to an advancement direction A with a movement step P and according to a time interval T between one movement step P and the other.

Preferably, the time interval T is defined by a movement time Tm and a conveyor stop time Ts (i.e. T= Tm+Ts).

Preferably, the first apparatus comprises a plurality of seats, each configured to house an electrochemical cell, said seats being arranged on the conveyor so as to be transported along the transport path.

Preferably, the first apparatus comprises a processing device.

Preferably, the transport path comprises an active sector.

Preferably, said seats are equidistant from each other and spaced along the advancement direction A according to a predetermined spacing step D at least along the active sector of the transport path.

Preferably, the movement step P corresponds to N times the predetermined spacing step D, where N is an integer at least equal to 2.

Preferably, along the active sector of the transport path, a working area is defined at which N seats at a time of said plurality of seats are adapted to stop in the stop time Ts.

Preferably, the processing device is configured to simultaneously carry out in the stop time Ts a same operation on N electrochemical cells housed in N seats in the working area.

Preferably, along the active sector of the transport path, a deposition area is defined, upstream of the working area with respect to the advancement direction A, at which N seats at a time of said plurality of seats are adapted to stop in the stop time Ts.

Preferably, the movement device is configured to place on the conveyor, during the stop time Ts, one after the other, N electrochemical cells in N different positions at the N seats currently stopped in the deposition area.

The present invention therefore relates, in a second aspect thereof, to a processing method of electrochemical cells.

Preferably, it is provided to step-wise move a plurality of seats along a transport path according to an advancement direction A with a movement step P and according to a time interval T between one movement step P and the other.

Preferably, the time interval T is defined by a movement time Tm and a stop time Ts.

Preferably, said seats are equidistant from each other and spaced according to a predetermined spacing step D along at least one active sector of the transport path.

Preferably, the movement step P corresponds to N times the predetermined spacing step D.

Preferably, during the step-wise movement of said plurality of seats, in the stop time Ts, it is provided to stop N seats at a time of said plurality of seats in a working area defined along the active sector of the transport path to perform a same operation simultaneously on N electrochemical cells transported by the N seats stopped in the working area.

Preferably, during the step-wise movement of said plurality of seats, in the stop time Ts, it is provided to stop N seats at a time of said plurality of seats in a deposition area defined along the active sector of the transport path upstream of the working area with respect to the advancement direction A, and to place, one after the other, N electrochemical cells in N different positions at the N seats stopped in the deposition area.

According to the invention, in the first station, the operation may be performed, in the stop time Ts, on N electrochemical cells at a time. Furthermore, during the stop time Ts, N electrochemical cells at a time may be delivered to the first station at N different positions at N seats stopped at a defined deposition area at that station. Due to the fact that the movement step P corresponds to N times the spacing step D of the seats, by setting the time interval T between one movement step P and the other equal to N times a predetermined cycle time Tc for the line and by providing that the stop time Ts is greater than the predetermined cycle time Tc, the invention allows to perform such an operation with an execution time greater than the cycle time Tc without requiring the presence of a buffer to temporarily stop electrochemical cells coming from an immediately upstream station having such a cycle time Tc.

Overall, the objects set forth above of making it possible to implement a processing line having a simple structure together with short processing times, limited space and costs are achieved.

"Cycle time" as referred to a station of a processing line of electrochemical cells indicates the time between the exit of one electrochemical cell out of that station and the exit of the subsequent electrochemical cell. In other words, given a station adapted to perform predetermined operations on electrochemical cells, the "cycle time" is indicative of the number of electrochemical cells processed (and, thus, output) by the station in the unit of time. For example, a cycle time of 1 second means that the station processes (and thus outputs) one electrochemical cell per second. On the other hand, a cycle time of 2 seconds means that the station processes (and thus outputs) 0.5 electrochemical cells per second.

In particular, "building cycle time" as referred to the building of electrochemical cells indicates the time between the exit of an electrochemical cell from a specific building apparatus/station and the exit of the subsequent electrochemical cell. In other words, given a building station of electrochemical cells, the "building cycle time" is indicative of the number of electrochemical cells built (and, thus, output from the building station) in the unit of time. For example, a building cycle time of 1 second means that the building station builds (and thus outputs) one electrochemical cell per second. On the other hand, a building cycle time of 2 seconds means that the station builds (and thus outputs) 0.5 electrochemical cells per second.

"Building" as referred to electrochemical cells indicates the process of cell formation. In particular, jelly roll electrochemical cells indicate the process of spirally winding separators and electrodes to form a cylinder-shaped jelly roll.

"Spacing step D" as referred to seats moved along a transport path according to an advancement direction indicates the distance measured along the advancement direction between two planes parallel to each other, perpendicular to the advancement direction and passing through two identical points of two seats adjacent to each other along the advancement direction. Such two identical points may, for example, be placed at the centreline of the respective seats.

"Conditioning" as referred to electrochemical cells indicates one or more operations that may be performed on the electrochemical cells before assembling the electric batteries. These operations are typically performed after a step of building jelly roll electrochemical cells and after an operation of reforming them. Such operations may comprise, for example, the insertion of a hollow cylinder into the through-hole of the jelly-roll electrochemical cells which is adapted to protect the inner walls of the through-hole during a subsequent welding process which requires the insertion of a welding device into the through-hole of the jelly roll. Other examples of conditioning operations may comprise an operation for writing data on an outer surface of the electrochemical cell, an operation for checking and verifying written data, operations for checking electrical resistances between various elements of the electrochemical cell, rejecting electrochemical cells deemed as inadequate, and the like.

The present invention may have, in the aspects discussed above, at least one of the preferred features described below. These characteristics may therefore be present individually or in combination with each other, unless expressly stated otherwise.

The conveyor may comprise a conveyor belt or a transport wheel.

Preferably, said time interval T between one movement step P and the other of the conveyor is equal to N times a predetermined cycle time Tc of the line (i.e., T= Tm+Ts=N*Tc).

Preferably, said predetermined cycle time Tc of the line corresponds to the cycle time of a further station, other than the first station. Preferably, said further station is comprised in said line and is located, in said line, upstream of the first station.

Preferably, said further station of the processing line is a building station of the electrochemical cells.

In a preferred embodiment, the predetermined cycle time Tc of the line corresponds to the building cycle time of a building station of the electrochemical cells. In other words, said time interval T between one movement step P and the other of the conveyor is equal to N times the building cycle time Tc of the electrochemical cells. Said building cycle time Tc corresponds to the time between the exit of one electrochemical cell from the building station of electrochemical cells and the exit of the next electrochemical cell. Preferably, the stop time Ts is greater than the predetermined cycle time Tc.

Preferably, during said stop time Ts, the movement device is configured to pick up the N electrochemical cells, one after the other, from a building station of electrochemical cells having a predetermined building cycle time Tc and then place them one after the other on the conveyor. In this case, said predetermined cycle time Tc of the line preferably corresponds to the building cycle time Tc of the building station and said time interval T between one movement step P and the other of the conveyor is equal to N times said building cycle time Tc. In addition, the stop time Ts is greater than said building cycle time Tc.

Preferably, the processing line also comprises said building station adapted to build said electrochemical cells with the building cycle time Tc.

Preferably, along the active sector of the transport path, a pick-up area is defined downstream of the working area with respect to the advancement direction A.

Preferably, the first apparatus comprises a transfer device comprising N heads configured to pick up, one after the other, at the pick-up area, in the movement time Tm, N electrochemical cells from N seats of said plurality of seats transiting through the pick-up area.

Preferably, the N heads are rotatably mounted about a rotation axis to cyclically follow a closed loop trajectory.

Preferably, this closed loop trajectory cooperates with the transport path at the pick-up area so that N electrochemical cells may be picked up by N heads.

Preferably, the transfer device comprises a regulation unit configured to command the rotation of the N heads with a total rotation time equal to the time interval T so that the N heads are located, one after the other, at the pick-up area during the movement time Tm, to then continue the rotation and return again at the pick-up area during the stop time Ts.

Preferably, the processing line also comprises a second station.

Preferably, the second station comprises a second conveyor moving step-wise along a second transport path according to a second advancement direction A2 with a second movement step P2 and according to a second time interval T2 between a second movement step P2 and the other.

The second conveyor may comprise a conveyor belt or a tranpsort wheel.

Preferably, the second time interval T2 is defined by a second movement time Tm2 and a second stop time Ts2 of the second conveyor, with T2=T/N.

Preferably, the second station comprises a plurality of second seats, each configured to house an electrochemical cell, said second seats being arranged on the second conveyor so as to be transported along the second transport path.

Preferably, said second seats are equidistant from each other and spaced along the second advancement direction A2 according to the predetermined spacing step D at least along a second active sector of the second transport path.

Preferably, said second movement step P2 of the second conveyor corresponds to the predetermined spacing step D.

Preferably, along the second active sector of the second transport path, a second deposition area is defined at which a second seat at a time of said plurality of second seats is adapted to stop in the second stop time Ts2.

Preferably, the N heads of the transfer device are configured to deliver, one at a time, the N electrochemical cells picked up from the pick-up area, in successive stop times Ts2, to the second seat stopped at the second deposition area.

Preferably, the regulation unit of the transfer device is configured to command the rotation of the N heads so that the N heads are located, one after the other, at the second deposition area in N successive stop times Ts2 so as to allow the delivery of the picked up N electrochemical cells to the second seat which is each time stopped at the second deposition area.

Preferably, along the second active sector of the second transport path, a plurality of second working areas is defined, downstream of the second deposition area with respect to the second advancement direction A2, wherein, at each second working area, one seat at a time of said plurality of second seats is adapted to stop for the stop time Ts2.

In a preferred embodiment, the processing device is a reforming device with N reforming needles, which is adapted to simultaneously perform a same reforming operation on the N electrochemical cells housed in the N seats stopped in the working area.

Preferably, in said defined working area along the active sector of the transport path, the N reforming needles and the N seats currently stopped in the working area are movable with respect to each other to allow simultaneous insertion of the N reforming needles into respective holes of the N electrochemical cells housed in the N seats currently stopped in the reforming area. Preferably, the electrochemical cells are of the jelly roll type.

In a preferred embodiment, the second station is a conditioning apparatus.

Preferably, in each of the plurality of working areas a corresponding conditioning operation is performed. Conditioning operations may comprise, for example, inserting a hollow cylinder into the through-hole of each electrochemical cell of the jelly roll type, operations for checking electrical resistances between various elements of the electrochemical cell, operations for visually inspecting the electrochemical cell to, for example, check the dimensions of the through-hole, operations for writing data on an external surface of the electrochemical cell, operations for checking and verifying written data, rejecting electrochemical cells deemed as inadequate, and the like.

Preferably, N is comprised between 2 and 5; e.g. N=3 or N=4.

Preferably, the transport path is closed.

Preferably, the transport path is a closed loop path.

Preferably, the second transport path is closed.

Preferably, the second transport path is a closed loop path.

In a preferred embodiment, the movement device is an industrial robot (e.g. of the SCARA type) with a robot arm with at least 2 degrees of freedom.

In a preferred embodiment, the N heads of the transfer device are configured to pick up the electrochemical cells by suction.

Preferably, the second time interval T2 between the second movement step P2 and the other of the second conveyor is equal to the building cycle time Tc (i.e. T2=Tc).

Preferably, the stop time Ts is greater than the movement time Tm. Preferably Ts ≥ 3*Tm; more preferably Ts ≥ 5*Tm.

In a preferred embodiment, the stop time Ts is approximately equal to 2/3 of the time interval T between one movement step P and the other and the movement time Tm is approximately equal to 1/3 of the time interval T.

Preferably, the second stop time Ts2 is greater than the second movement time Tm2. Preferably Ts2 ≥ 2*Tm2; more preferably Ts2 ≥ 3*Tm2.

In a preferred embodiment, the second stop time Ts2 is approximately equal to 2/3 of the second time interval T2 between a second movement step P2 and the second movement time Tm2 is approximately equal to 1/3 of the second time interval T2.

The second movement time Tm2 is preferably shorter than the movement time Tm.

The second stop time Ts2 is preferably shorter than the stop time Ts1.

Preferably, in the reforming method, in said stop time Ts, it is provided to pick up N electrochemical cells one after the other, from a building station having a predetermined building cycle time Tc to place them, one after the other, in the N seats currently stopped in the deposition area, wherein said time interval T between one movement step P and the other is equal to N times the building cycle time Tc.

Preferably, in the reforming method, during the step-wise movement of said plurality of seats, in the movement time Tm, it is provided to:
- transit, one after the other, N seats of said plurality of seats in a pick-up area defined along the active sector of the transport path downstream of the working area with respect to the advancement direction A; and
- pick up N electrochemical cells, one after the other, from the N seats transiting in the pick-up area.

Preferably, in the reforming method, it is provided to move step-wise a plurality of second seats along a second transport path according to a second advancement direction A2 with a second movement step P2 and according to a second time interval T2 between a second movement step P2 and the other.

Preferably, the second time interval T2 is defined by a second movement time Tm2 and a second stop time Ts2, with T2=T/N.

Preferably, said second seats are equidistant from each other and spaced according to the predetermined spacing step D at least along a second active sector of the second transport path.

Preferably, the second movement step P2 corresponds to the predetermined spacing step D.

Preferably, in the second stop time Ts2, it is provided to let a second seat at a time of said plurality of second seats stop in a second deposition area along the second active sector of the second transport path and deliver the N electrochemical cells taken from the N seats transiting from the pick-up area, one at a time, in subsequent stop times Ts2, to the second seat stopped in the second deposition area.

Preferably, the N reforming needles are equal to each other in structure.

Preferably, the N reforming needles are equal to each other in function.

Preferably, the N reforming needles have a longitudinal axis.

Preferably, the N reforming needles each comprise a body portion and a tip portion.

Preferably, in each reforming needle, the body portion is generally cylindrical and the longitudinal axis of the reforming needle is an axis of symmetry of the cylindrical body portion.

Preferably, in each reforming needle, the body portion is at least partially hollow.

Preferably, in each reforming needle, the body portion and the tip portion are made in a single piece.

Preferably, the tip portion may or may not be symmetrical with respect to the longitudinal axis of the reforming needle.

In one embodiment, in each reforming needle the free end of the tip portion is eccentric with respect to the longitudinal axis of the reforming needle.

Preferably, the reforming device comprises at least one rotation mechanism configured to rotate the N reforming needles about their respective longitudinal axis.

Preferably, the at least one rotation mechanism is configured to rotate the N reforming needles while (and possibly even before) inserting the N reforming needles into the through-holes of the electrochemical cells.

Preferably, the reforming device comprises N heating elements configured to heat the N reforming needles at a predetermined temperature.

Preferably, the N heating elements are respectively housed inside the N reforming needles and integral in rotation to the respective N reforming needles.

The N heating elements are preferably of a conductive type, e.g. comprising N electrical resistors.

Preferably, the reforming device also comprises N temperature sensors respectively associated with the N reforming needles and configured to detect temperature thereof.

Preferably, the reforming device comprises at least one controller provided with a power source connected to the N heating elements (and N temperature sensors when present).

Preferably, the N temperature sensors are respectively adapted to detect temperature values of the N heated reforming needles and to send the detected temperature values to said at least one controller. Preferably, based on the temperature values detected by the N temperature sensors, said at least one controller is adapted to maintain the temperature of the N reforming needles at a predetermined temperature value by controlling the operation of the N heating elements.

Preferably, each of the N temperature sensors is housed in a respective reforming needle and is integral in rotation with said respective reforming needle.

Preferably, the N heating elements (and the N temperature sensors when present) are connected to said at least one controller via N electromechanical devices of the slip ring type.

Preferably, said at least one rotation mechanism comprises an electric rotation motor.

Preferably, said at least one rotation mechanism comprises a plurality of toothed wheels driven by said electric rotation motor.

Preferably, said at least one rotation mechanism comprises a plurality of toothed wheels configured to simultaneously rotate all the N reforming needles.

Preferably, the N reforming needles are all rotated in the same direction.

Further features and advantages of the present invention will become clearer from the following detailed description of a preferred embodiment thereof, with reference to the appended drawings and provided by way of indicative and nonlimiting example, in which:
- Figure 1 schematically shows a processing line of electrochemical cells according to an embodiment of the invention;
- Figure 2 schematically shows an electrochemical cell with a reforming needle according to an embodiment of the invention;
- Figure 3 shows a reforming needle according to an alternative embodiment of the invention;
- Figure 4 schematically shows a reforming device in a side view according to an embodiment of the invention;
- Figure 5 schematically shows the reforming device of Figure 4 with some parts removed to better highlight others and with some details partially in section;
- Figure 6 schematically shows the reforming device of Figure 3 in a front view and with some parts removed to better highlight others;
- Figure 7 schematically shows a processing line of electrochemical cells according to a preferred embodiment of the invention.

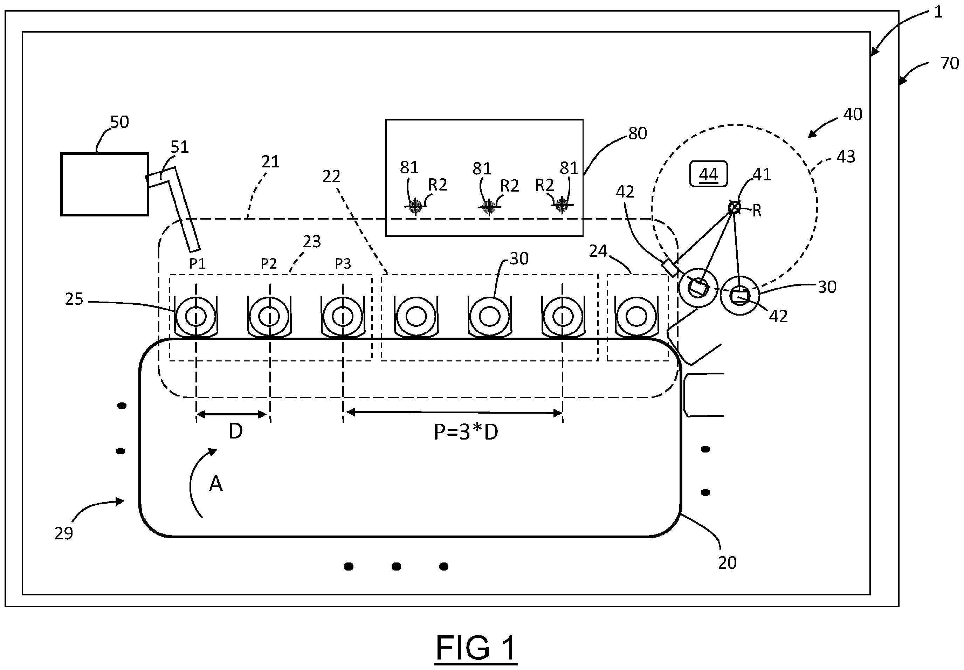

Figure 1 schematically shows a processing line 70 according to an embodiment of the present invention.

The processing line 70 is configured so as to implement a processing method of electrochemical cells according to an embodiment of the present invention.

In the embodiment shown, the processing line 70 comprises a first station consisting of a reforming apparatus 1.

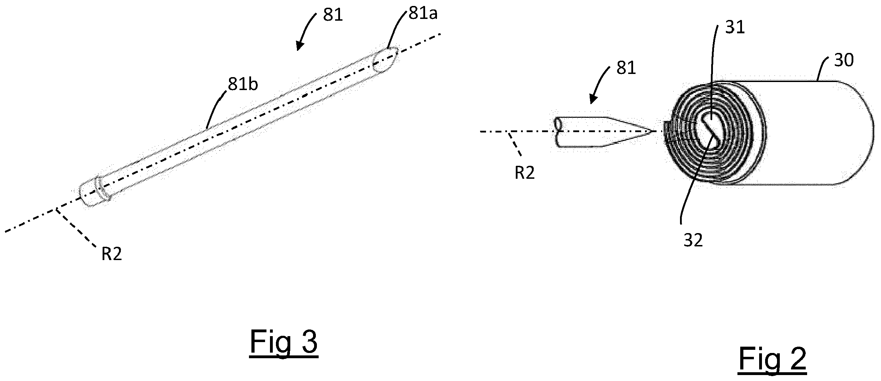

The reforming apparatus 1 is configured to perform a reforming operation on electrochemical cells 30 of the jelly roll type shown in Figure 2 wherein two electrodes and a separator between the two electrodes are wound in a spiral to form a cylinder-shaped electrochemical cell 30.

As noted above, in the process of forming electrochemical cells 30 of the jelly roll type, as a result of the aforementioned spiral winding of the separator and electrodes, a portion of the separator 32 having a typically S-shaped cross-section is created within a through-hole 31 in the jelly roll.

The reforming operation is adapted to reposition the portion of the separator 32 against the inner walls of the through-hole 31.

In the embodiment shown, the reforming apparatus 1 comprises a conveyor belt 29 moving step-wise along a transport path 20 according to an advancement direction A with a movement step P and according to a time interval T between one movement step P and the other. The time interval T is defined by a movement time Tm and a stop time Ts of the conveyor belt (i.e. T= Tm+Ts).

The reforming apparatus 1 also comprises a plurality of seats 25, each configured to house an electrochemical cell 30.

The seats 25 are fixed to the conveyor belt so that they may be transported along the transport path 20.

The transport path 20 comprises an active sector 21.

At least along the active sector 21 of the transport path 20, the seats 25 are equidistant from each other and spaced along the advancement direction A according to a predetermined spacing step D. Preferably, as approximately indicated in Figure 1 with dots, the seats 25 are equidistant from each other and spaced along the advancement direction A according to the spacing step D throughout the transport path 20.

For example, the predetermined distance step D may be between 50 and 100 mm.

According to the invention, the movement step P of the conveyor belt 29 corresponds to N times the predetermined spacing step D, where N is an integer at least equal to 2. By way of example, in the embodiment shown in Fig. 1, N=3 so P=3*D. Thereby, in the movement time Tm of the conveyor belt 29, the seats 25 are advanced along the advancement direction A for a distance equal to N times the spacing step D.

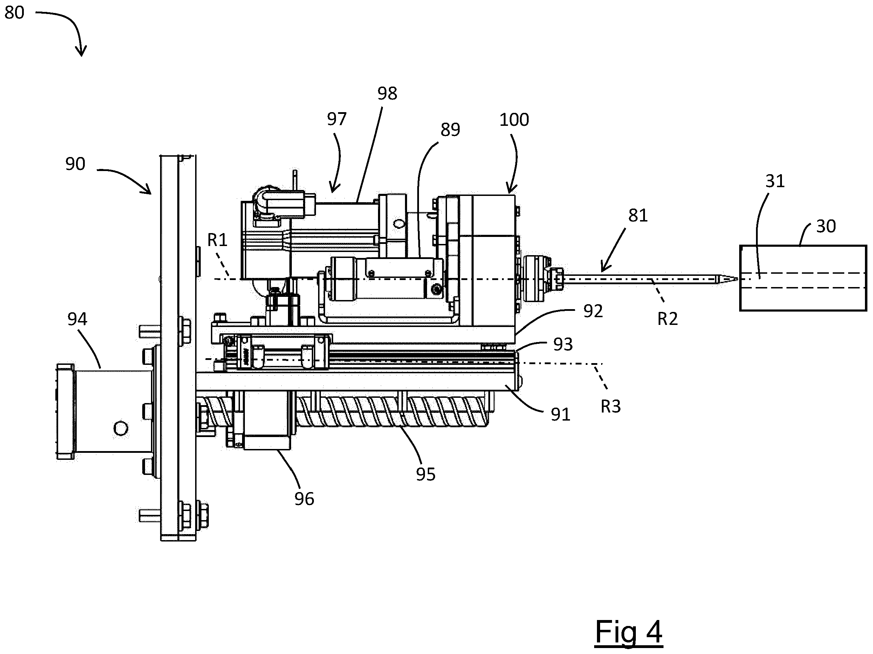

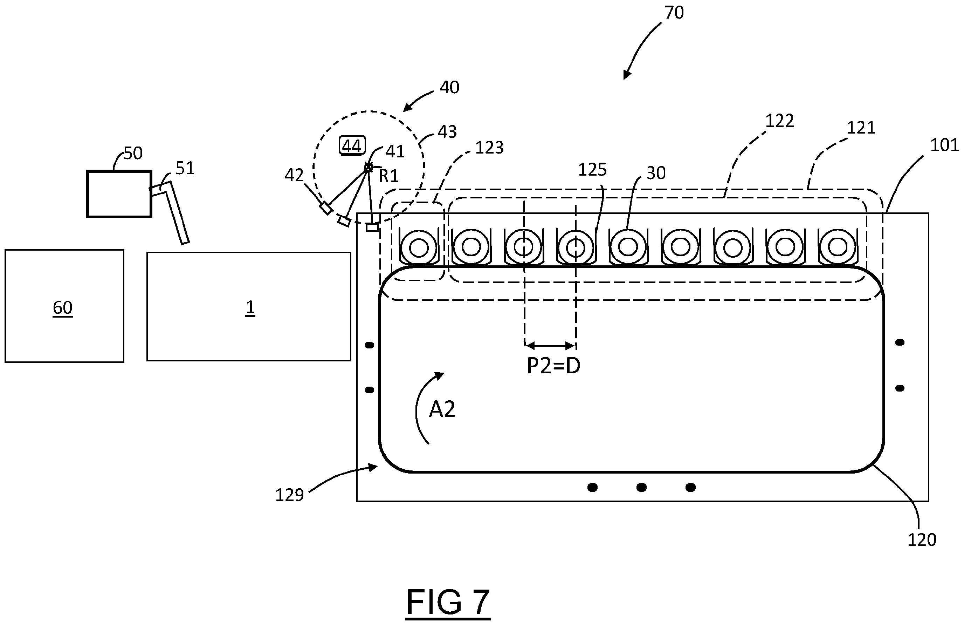

Figures 1 and 7 show an embodiment of reforming apparatus 1 with N=3. However, the structural and functional characteristics described with reference to this example may be used by the person skilled in the art to create a reforming apparatus 1 with N other than 3 (e.g. with N=4, as in the example hereinafter shown with reference to Figures 4-6).

The reforming apparatus 1 also comprises a reforming device 80 comprising N reforming needles 81 (in the embodiment shown in Fig. 1, 3 reforming needles 81).

As shown in Figure 3, each of the N reforming needles 81 extends longitudinally along a longitudinal axis R2 and ends with a tip portion 81a.

In particular, each of the N reforming needles 81 comprises a generally cylindrical body portion 81b and the longitudinal axis R2 is an axis of symmetry of the cylindrical body portion 81b. The tip portion is preferably made in a single piece with the body portion 81b.

In the embodiment shown in Figure 3, the free end of the tip portion 81a is eccentric with respect to the axis R2 so as to avoid interfering with and possibly ruining the portion of separator 32 while inserting the needle 81 into the through-hole 31 of the cell 30. However, the invention also applies to the case of a tip portion 81a aligned to the axis R2 as shown in Figure 2.

In order to optimise the reforming operation, the N reforming needles 81 are preferably heated.

In addition, in a preferred embodiment, still in order to optimise the reforming operation, the N reforming needles 81 are adapted to be rotated about their own axis R2.

In case of reforming needles 81 set in rotation and when the free end of the tip portion 81a is eccentric with respect to the axis R2, it is preferably provided, before starting the rotation, to partially insert the reforming needle 81 into the through-hole 31 of the cell 30, such insertion being calibrated so as to ensure that the tip 81a is inserted into the through-hole 31 without interfering with the S-shaped separator portion. Thereafter, the reforming needle 81 is rotated and the insertion of the needle 81 into the through-hole 31 is completed.

Preferably, the rotation direction of the reforming needle 81 is opposite to the winding direction of the jelly roll.

For example, the N reforming needles 81 may be rotated at a speed between 50 and 2000 rpm. Preferably, the rotation speed of the N needles 81 is between 500 and 2000 rpm; more preferably between 1000 and 2000 rpm.

Figures 4-6 show an embodiment of a reforming device 80 with N=4. However, the structural and functional characteristics hereinafter described may be used by the person skilled in the art to create a reforming device 80 with N other than 4 (e.g. with N=3, as in the example shown in Figure 1).

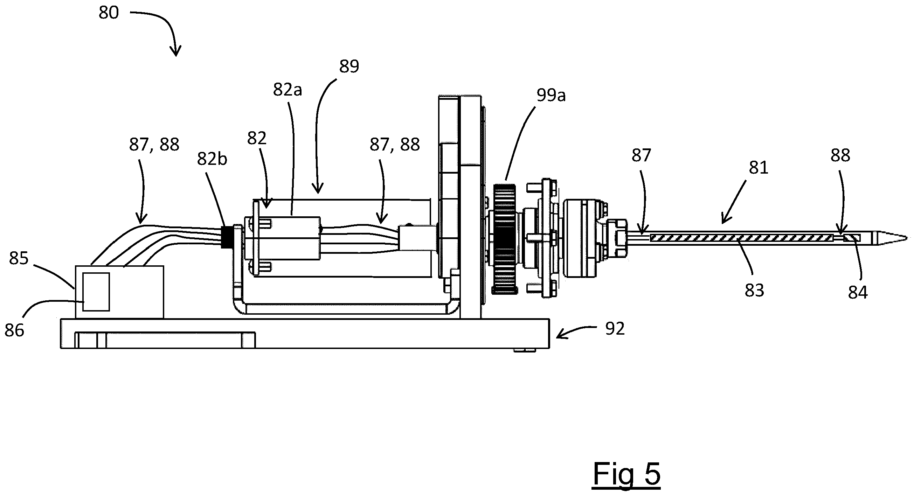

In the embodiment shown in Figures 4-6 (wherein, for ease of illustration, only one of the N needles 81 is shown in Figures 4-5), the reforming device 80 comprises, for each reforming needle 81, an electromechanical device of the slip ring type 82 and at least one heating element 83 schematically shown in Figure 5.

For example, the heating element 83 comprises an electrical resistor.

In the embodiment shown, the heating element 83 is preferably arranged inside the reforming needle 81. This advantageously allows the N reforming needles 81 to be heated while performing the reforming operation and preferably also before they are inserted into the through-hole 31 of the electrochemical cell 30.

Preferably, the body portion 81b of the reforming needle 81 is at least partially hollow so as to allow inserting the heating element 83.

The heating element 83 is arranged inside the reforming needle 81 along most of the length of the body portion 81b.

The heating element 83 placed in the cavity of the reforming needle 81 is integral in rotation with the reforming needle 81.

Compared to an alternative solution (e.g., known from CN209001039U) wherein the reforming needle is heated before being inserted inside the through-hole of the electrochemical cell by a heating element positioned outside the reforming needle and between the needle drive motor and the cell to be reformed, this embodiment of the invention with the inner heating element 83 advantageously allows to produce reforming needles 81 with a limited length, thus, less prone to bending during use. This allows greater control of the exact position of the reforming needle 81 when it is inserted into the through-hole 31 of the electrochemical cell 30. In addition, an inner heating of the needle 81 allows the required optimum temperature to be maintained throughout the reforming process, preventing the needle 81 from cooling or otherwise changing its temperature once inserted into the through-hole 31 of the electrochemical cell 30.

In this regard, a preferred embodiment is shown in Figure 5 wherein a temperature sensor 84 placed inside the reforming needle 81 and configured to continuously detect the temperature of the reforming needle 81 at least during the reforming operation is provided.

The heating element 83 and the temperature sensor 84 are connected via electrical connections 87 and 88 to a controller 85 provided with a power supply source 86. The controller 85 may be in a remote position or close to the reforming needle 81. In addition, the controller 85 may be a single controller or comprise several controllers, e.g. one for each reforming needle 81.

Given that the reforming needle 81 and the heating element 83 (and the temperature sensor 84 when provided) are rotating with respect to the controller 85, the electrical connection between the heating element 83 (and the temperature sensor 84 when provided) and the controller 85 passes through the electromechanical device of the slip ring type 82.

The latter is a device of a type known in the art adapted to continuously transmit electrical power and signals between a static and a rotating part.

As shown in Figure 5, the electromechanical device 82 of the slip ring type is interposed between the reforming needle 81 and the controller 85.

The temperature sensor 84 is adapted to detect the temperature of the heated reforming needle 81 and send the detected values to the controller 85 via the electrical connections 88. Based on the values detected by the temperature sensor 84, the controller 85 is in turn adapted to keep the temperature of the reforming needle 81 at a predetermined temperature value by controlling the operation of the heating element 83 via the electrical connections 87.

For example, the predetermined temperature value may be between 60 and 130 °C.

This may be obtained with an electrical power supply of between 20 and 200 watts.

The reforming device 80 further comprises a rotating support 89 for each reforming needle 81. Each rotating support 89 rotates about a respective support axis R1 which is coincident with the longitudinal axis R2 of the respective reforming needle 81.

Each rotating support 89 is mounted integral in rotation with the reforming needle 81 and the heating element 83 placed therein (and with the temperature sensor 84 when provided). As shown in Figure 5, the rotating support 89 defines a housing to house a rotating part 82a of the electromechanical device 82 of the slip ring type therein. The rotating part 82a of the slip ring-type electromechanical device 82 is integral in rotation with the rotating support 89.

The reforming device 80 further comprises a support frame 90. The support frame 90 comprises a support structure 91 and a carriage 92 slidably mounted on the support structure 91.

All the N reforming needles 81 are mounted integrally in translation on the carriage 92. All the N rotating supports 89 are mounted integrally in translation on the carriage 92.

The carriage 92 translates with respect to the support structure 91 along rails 93 that run along a sliding direction R3. The sliding direction R3 is parallel to the longitudinal axes R2 of the reforming needles 81. The longitudinal axes R2 of the N reforming needles 81 are parallel to each other.

The N reforming needles 81 are thereby movable with respect to the N electrochemical cells to be reformed allowing the simultaneous insertion and extraction of the N reforming needles 81 into/from the respective holes 31 of the N electrochemical cells 30.

In order to allow the carriage 92 to translate with respect to the support structure 91, the reforming device 80 comprises an electric translation motor 94 which is integral with the support structure 91 and which rotates an endless screw 95 running parallel to the sliding direction R3. The endless screw 95 is coupled with a bushing 96 connected to the carriage 92. When the endless screw 95 is rotated by the electric translation motor 94, the bushing 96 translates along the endless screw 95 and thus brings the carriage 92 into translation along the sliding direction R3.

In the embodiment shown in Figure 5, the controller 85 is shown integral with the carriage 92. However, in other alternative embodiments, the controller 85 may be in a position remote from the carriage 92.

In any case, a fixed part 82b of the slip ring-type electromechanical device 82 is integral to the carriage 92.

The N reforming needles 81 are integral in translation to the carriage 92 and rotate about the longitudinal axis R2 with respect to the carriage 92.

In this regard, the reforming device 80 comprises at least one rotation mechanism 97 configured to rotate the N reforming needles 81 about the respective longitudinal axis R2 and the N supports 89 rotating about the respective support axis R1.

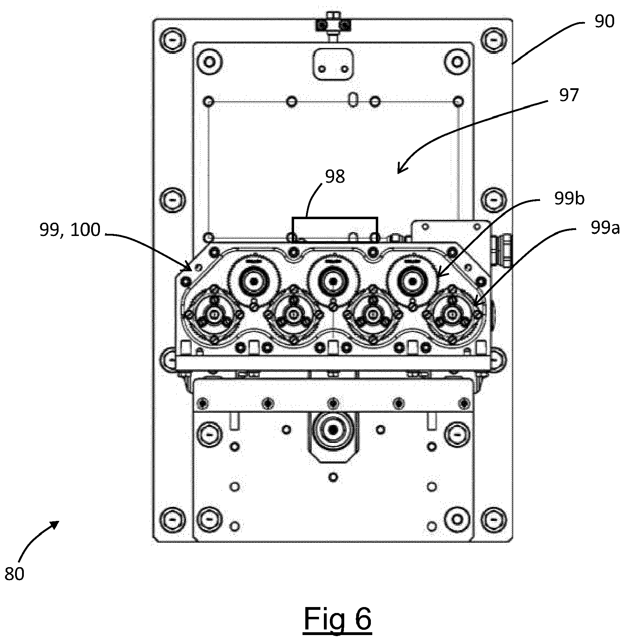

The rotation mechanism 97 comprises an electric rotation motor 98 and a plurality of toothed wheels 99 (better shown in Figure 6).

At least the first toothed wheels 99a of the plurality of toothed wheels 99 are keyed or otherwise coaxial in rotation with the N rotating supports 89 and the N reforming needles 81. A transmission mechanism 100 transmits a rotary motion to the first toothed wheels 99a. This transmission mechanism 100 is connected to the electric rotation motor 98 and is configured to rotate all the first toothed wheels 99a in the same angular direction.

The transmission mechanism 100 is mounted on the carriage 92.

The transmission mechanism 100 comprises second toothed wheels 99b of the plurality of toothed wheels 99. A single second toothed wheel 99b is rotated directly by the electric rotation motor 98 in a second angular direction opposite to the first angular direction. This single second toothed wheel 99b is engaged on two adjacent first toothed wheels 99a and rotates the latter in the first angular direction. Each of the two adjacent first toothed wheels 99a is also geared to a respective second toothed wheel 99b and rotates the latter in the second angular direction. In turn, these second toothed wheels 99b are geared to two further first toothed wheels 99a and rotate the latter in the first angular direction.

This transmission mechanism 100 is particularly directed to rotate four reforming needles 81.

However, this transmission mechanism 100 may be adapted to rotate a different number of reforming needles 81 (as, for example, in the case of the reforming apparatus 1 shown in Figures 1 and 7 where N=3).

Returning to the reforming apparatus 1 of Figure 1, in the active sector 21 of the transport path 20 a reforming area 22 and a deposition area 23 are defined in each of which N seats 25 at a time of the plurality of seats 25 are adapted to stop in the stop time Ts.

At the reforming area 22, the N reforming needles 81 and the N seats 25 currently stopped in the reforming area 22 are movable with respect to each other to allow the simultaneous insertion of the N reforming needles 81 into respective holes 31 of N electrochemical cells 30 housed in the N seats 25 currently stopped in the reforming area 22. The reforming operation is thereby performed simultaneously on N electrochemical cells 30 at a time.

Preferably, the time interval T between one movement step P and the other of the belt is equal to N times a building cycle time Tc of electrochemical cells (i.e., T= Tm+Ts=N*Tc; where, in the embodiment shown in Figures 1 and 7, T=3*Tc).

Furthermore, the stop time Ts is greater than both the building cycle time Tc and the movement time Tm. This advantageously allows to maximise the time dedicated to the reforming operation.

It is thereby possible to perform the reforming operation with an execution time (which may be set equal or nearly equal to the stop time Ts) that is greater than the building cycle time Tc of the electrochemical cells 30.

For example, in the case of Tc=1s (and, hence, T=N*Tc=3s), Ts may be set essentially equal to 2.5s and Tm equal to 0.5s. The reforming operation may thus be performed with an execution time of 2.5s, including the time for inserting and extracting the N reforming needles 81 into/from the respective through-holes 31.

Furthermore, the reforming apparatus 1 comprises a movement device 50 configured to place, in the stop time Ts, N electrochemical cells 30 one after the other on the conveyor 29 in N different positions P1, P2, P3 at the N seats 25 currently stopped in the deposition area 23.

For example, the movement device 50 may be an anthropomorphic industrial robot of the SCARA type with a robot arm 51 with at least 2 degrees of freedom.

As the stop time Ts is greater than the building cycle time Tc, this advantageously allows to place N electrochemical cells 30 directly on the conveyor belt 29 at positions P1, P2, P3 during the stop time Ts, without requiring a buffer to store the electrochemical cells 30 coming from an upstream building station with the building cycle time Tc.

Along the active sector 21 of the transport path, downstream of the reforming area 22 with respect to the advancement direction A, a pick-up area 24 is defined, through which N seats 25 are adapted to transit in the movement time Tm.

The reforming apparatus 1 also comprises a transfer device 40 comprising N heads 42 configured to pick up (e.g. by suction), one after the other, at the pick-up area 24, in the movement time Tm, N electrochemical cells 30 from the N seats 25 transiting through the pick-up area 24.

The N heads 42 are rotatably mounted about a shaft 41 with a rotation axis R (which in Figure 1 is perpendicular to the plane of the sheet) to cyclically follow a closed loop trajectory 43. The latter is configured so as to cooperate with the transport path 20 at the pick-up area 24 so as to allow the N electrochemical cells 30 to be picked up by the N heads 42.

The transfer device 40 comprises a regulation unit 44 configured to command the rotation of the N heads 42 with a total rotation time equal to the time interval T so that the N heads 42 are located, one after the other, at the pick-up area 24 during the movement time Tm, to then continue the rotation and return again at the pick-up area 24 during the stop time Ts.

Figure 7 shows a preferred embodiment of the processing line 70 which, in addition to the reforming apparatus 1, also comprises a building station 60 of the electrochemical cells 30, upstream of the reforming apparatus 1, and a second station, comprising a conditioning apparatus 101, downstream of the reforming apparatus 1.

The terms "upstream" and "downstream" refer herein to the advancement direction of the electrochemical cells 30 within the processing line 70, which are built in the building station 60 and then are subjected to a reforming operation in the reforming apparatus 1 and then to a series of conditioning operations in the conditioning apparatus 100.

The building station 60 is adapted to build electrochemical cells 30, e.g. of the jelly roll type, according to techniques known in the art, which will therefore not be described in detail hereinafter.

The building station 60 is adapted to build electrochemical cells 30 with the building cycle time Tc.

The reforming apparatus 1 is made as described above with reference to Figures 1-6. For ease of illustration, only the movement device 50 and the transfer device 40 are highlighted in Figure 7.

The movement device 50 is adapted to pick up from the building station 60 the electrochemical cells 30 built with the cycle time Tc and place them, during the stop time Ts, directly on the conveyor belt 29 in positions P1, P2, P3, without requiring the presence of a buffer between the building station 60 and the reforming apparatus 1.

The conditioning apparatus 101 comprises a second conveyor belt 129 moving step-wise along a second transport path 120 according to a second advancement direction A2 with a second movement step P2 and according to a second time interval T2 between a second movement step P2 and the other. The second time interval T2 is defined by a second movement time Tm2 and a second stop time Ts2 of the second conveyor belt, with T2=Tm2+Ts2=T/N.

The second transport path 120 comprises a second active sector 121.

The conditioning apparatus 101 also comprises a plurality of second seats 125, each configured to house an electrochemical cell 30. The second seats 125 are arranged on the second conveyor belt 129 so as to be transported along the second transport path 120.

At least along the second active sector 121, the second seats 125 are equidistant from each other and spaced along the second advancement direction A2 according to the same spacing step D as the seats 25 in the reforming apparatus 1. Preferably, as approximately indicated in Figure 7 with dots, the seats 125 are equidistant from each other and spaced along the second advancement direction A2 according to the spacing step D throughout the second transport path 120.

The second movement step P2 of the second conveyor belt 129 corresponds to the predetermined spacing step D (i.e. P2=D). Thereby, in the second movement time Tm2 of the second conveyor belt 129, the second seats 125 are advanced along the second advancement direction A2 for a distance equal to the spacing step D.

Along the second active sector 121 of the second transport path 120, a second deposition area 123 is defined at which a second seat 125 at a time is adapted to stop in the second stop time Ts2 .

The N heads 42 of the transfer device 40 are configured to deliver the N electrochemical cells picked up from the pick-up area 24 of the reforming apparatus 1, one at a time, in successive second stop times Ts2, to the second seat 125 currently stopped in the second deposition area 123.

The regulation unit 44 of the transfer device 40 is configured to command the rotation of the N heads 42 so that the N heads 42 are located, one after the other, at the second deposition area 123 in N successive stop times Ts2 so as to allow the delivery of the picked-up N electrochemical cells 30 to the second seat 125 which is each time stopped at the second deposition area 123.

Along the second active sector 121 of the second transport path 120, a plurality of working areas 122 are defined downstream of the second deposition area 123 with respect to the second advancement direction A2.

At each working area 122, a second seat 125 at a time is adapted to stop for the stop time Ts2 to perform a conditioning operation.

Such conditioning operations may comprise, for example, the insertion, into the through-hole 31 of the electrochemical cells 30 of the jelly roll type, of a hollow cylinder (not shown) adapted to protect the inner walls of the through-hole 31 during a subsequent welding process requiring the insertion of a welding device into the through-hole 31 of the jelly roll.

Other examples of conditioning operations may include operations for checking electrical resistances between various elements of the electrochemical cell, operations for visually inspecting the electrochemical cell 30 adapted to, for example, check the dimensions of the through-hole 31, operations for writing data on an outer surface of the electrochemical cell 30, operations for checking and verifying written data, rejecting electrochemical cells deemed as inadequate, and the like.

When in the reforming apparatus 1 the time interval T between one movement step P and the other is equal to N times Tc (i.e., T=N*Tc), the second time interval T2 between a second movement step P2 and the other is equal to Tc (i.e., T2=T/N=Tc).

Preferably, the stop time Ts2 is greater than the movement time Tm2 so as to maximise the time dedicated to each conditioning operation.

For example, in the case of Tc=1s, Ts2 may be set substantially equal to about 0.66s and Tm2 equal to 0.34s. Each conditioning operation may thus be performed with an execution time of 0.66s.

Given that the conditioning operations performed in the working areas 122 require execution times on each electrochemical cell 30 that are generally shorter than the execution time required by the reforming operation, the invention advantageously allows to perform the reforming operation with an execution time that is longer than the building cycle time Tc of the electrochemical cells 30 without requiring a slowdown of the conditioning apparatus 101 which is free to operate with cycle time T2=T/N=Tc. The same applies to the building station 60, which may build cells 30 with the building step Tc.

Taken as a whole, the invention thus advantageously allows to insert, between two "faster" stations (building station 60 and conditioning apparatus 101), operating with a cycle time Tc, a slower station (reforming apparatus 1), operating with a longer cycle time T, equal to N*Tc, without requiring the presence of a buffer or having to adapt the processing times of these "faster" stations to those of the "slower" station.

Finally, it should be noted that, even if Figures 1-7 refer to a processing line wherein the first "slower" station consists of a reforming apparatus 1 while the stations upstream and downstream of the first station consist of a building station 60 and a conditioning apparatus 101, respectively, the present invention similarly applies to another type of line comprising in general a "slower" station between two "faster" stations.

## Claims

1. Processing line (70) of electrochemical cells (30) comprising a first station (1) and a movement device (50), the first station (1) having a first apparatus (1) comprising:
- a conveyor (29) moving step-wise along a transport path (20) according to an advancement direction A with a movement step P and according to a time interval T between one movement step P and the next, wherein the time interval T is defined by a movement time Tm and a stop time Ts of the conveyor (29);
- a plurality of seats (25), each configured to house an electrochemical cell (30), said seats (25) being arranged on the conveyor (29) so as to be transported along the transport path (20); and
- a working device (80);
wherein:
- the transport path (20) comprises an active sector (21); said seats (25) being equidistant from each other and spaced along the advancement direction A according to a predetermined spacing step D at least along the active sector (21) of the transport path (20); the movement step P of the conveyor (29) corresponding to N times the predetermined spacing step D, where N is an integer at least equal to 2;
- along the active sector (21) of the transport path (20), a working area (22) is defined at which N seats at a time of said plurality of seats are adapted to stop in the stop time Ts; the working device (80) being configured to perform in the stop time Ts a same operation simultaneously on N electrochemical cells (30) housed in the N seats (25) stopped in the working area (22);
- along the active sector (21) of the transport path (20), upstream of the working area (22) with respect to the advancement direction A, a deposition area (23) is defined at which N seats (25) at a time of said plurality of seats (25) are adapted to stop in the stop time Ts; the movement device (50) being configured to place on the conveyor (29), in the stop time Ts, one after the other, N electrochemical cells (30) in N different positions (P1, P2, P3) at the N seats (25) currently stopped in the deposition area (23).

2. Processing line (70) according to claim 1, wherein said time interval T between one movement step P and the other of the conveyor is equal to N times a predetermined cycle time Tc of the line, the stop time being greater than said predetermined cycle time Tc of the line and said predetermined cycle time Tc of the line corresponding to the cycle time of a further station, different from the first station.

3. Processing line (70) according to claim 2, wherein the further station is a building station (60) of the electrochemical cells (30) having a predetermined building cycle time Tc that corresponds to said predetermined cycle time Tc of the line.

4. Processing line (70) according to claim 3 wherein, during said stop time Ts, the movement device (50) is configured to pick up the N electrochemical cells (30), one after the other, from said building station (60) and then place them one after the other on the conveyor (29).

5. Processing line (70) according to claim 3 or 4, further comprising said building station (60) adapted to build said electrochemical cells (30) with the building cycle time Tc.

6. Processing line (70) according to any one of the preceding claims, wherein along the active sector (21) of the transport path (20), downstream of the working area (22) with respect to the advancement direction A, a pick-up area (24) is defined and wherein the first apparatus (1) comprises a transfer device (40) comprising N heads (42) configured to pick up, one after the other, at the pick-up area (24), in the movement time Tm, N electrochemical cells (30) from N seats (25) of said plurality of seats (25) transiting through the pick-up area (24).

7. Processing line (70) according to claim 6, wherein the N heads (42) are rotatably mounted about a rotation axis (R) to cyclically follow a closed loop trajectory (43) and said closed loop trajectory (43) cooperates with the transport path (20) at the pick-up area (24) so as to allow the N electrochemical cells (30) to be picked up by the N heads (42).

8. Processing line (70) according to claim 7, wherein the transfer device (40) comprises a regulation unit (44) configured to command the rotation of the N heads (42) with a total rotation time equal to the time interval T such that the N heads (42) are, one after the other, at the pick-up area (24) during the movement time Tm, to then continue the rotation and return again at the pick-up area (24) during the stop time Ts.

9. Processing line (70) according to any one of the preceding claims, further comprising a second station (101) comprising:
- a second conveyor (129) moving step-wise along a second transport path (120) according to a second advancement direction A2 with a second movement step P2 and according to a second time interval T2 between a second movement step P2 and another, wherein the second time interval T2 is defined by a second movement time Tm2 and a second stop time Ts2 of the second conveyor, with T2=T/N;
- a plurality of second seats (125), each configured to house an electrochemical cell (30), said second seats (125) being arranged on the second conveyor (129) so as to be transported along the second transport path (120); said second seats (125) being equidistant from each other and spaced along the second advancement direction A2 according to the predetermined spacing step D at least along a second active sector (121) of the second transport path (120); said second movement step P2 of the second conveyor (129) corresponding to the predetermined spacing step D.

10. Processing line (70) according to claim 9, wherein along the second active sector (121) of the second transport path (120) a second deposition area (123) is defined at which a second seat (125) at a time of said plurality of second seats (125) is adapted to stop in the second stop time Ts2.

11. Processing line (70) according to claim 10 and any one of claims 6-8, wherein the N heads (42) of the transfer device (40) are configured to deliver, one at a time, the N electrochemical cells (30) picked up from the pick-up area (24), in successive stop times Ts2, to the second seat (125) stopped in the second deposition area (123).

12. Processing line (70) according to claims 11 and 8, wherein the regulation unit (44) of the transfer device (40) is configured to command the rotation of the N heads (42) so that the N heads (42) are located, one after the other, at the second deposition area (123) in N successive stop times Ts2 so as to allow the delivery of the picked-up N electrochemical cells (30) to the second seat (125) which is each time stopped at the second deposition area (123).

13. Processing line (70) according to any one of claims 9 to 12, wherein along the second active sector (121) of the second transport path (120) a plurality of second working areas (122) is defined downstream of the second deposition area (123) with respect to the second advancement direction A2, and wherein, at each second working area (122), a second seat (125) at a time of said plurality of second seats (125) is adapted to stop for the stop time Ts2.

14. Processing line (70) according to any one of the preceding claims, wherein the working device (80) is a reforming device with N reforming needles (81) and wherein, in said working area (22) defined along the active sector (21) of the transport path (20) the N reforming needles (81) and the N seats (25) currently stopped in the working area (22) are movable with respect to each other to allow the simultaneous insertion of the N reforming needles (81) into respective holes (31) of the N electrochemical cells (30) housed in the N seats (25) currently stopped in the working area (22).

15. Processing line (70) according to any one of the preceding claims, wherein the electrochemical cells (30) are of the jelly roll type.

16. Processing method of electrochemical cells (30) comprising:
- moving step-wise a plurality of seats (25) along a transport path (20) according to an advancement direction A with a movement step P and according to a time interval T between one movement step P and the other, wherein the time interval T is defined by a movement time Tm and a stop time Ts; wherein said seats (25) are equidistant from each other and spaced according to a predetermined spacing step D along at least one active sector (21) of the transport path (20) and wherein the movement step P corresponds to N times the predetermined spacing step D;
- during the step-wise movement of said plurality of seats (25), in the stop time Ts: stopping N seats (25) at a time of said plurality of seats (25) in a working area (22) defined along the active sector (21) of the transport path (20) to perform a same operation simultaneously on N electrochemical cells (30) transported by the N seats (25) stopped in the working area (22);
- during the step-wise movement of said plurality of seats (25), in the stop time Ts: stopping N seats (25) at a time of said plurality of seats (25) in a deposition area (23) defined along the active sector (21) of the transport path (20) upstream of the working area (22) with respect to the advancement direction A, and placing, one after the other, N electrochemical cells (30) in N different positions (P1, P2, P3) at the N seats (25) stopped in the deposition area (23).

17. Method according to claim 16, comprising, in said stop time Ts, picking up N electrochemical cells (30), one after the other, from a building station (60) having a predetermined building cycle time Tc to place them, one after the other, in the N seats (25) currently stopped in the deposition area (23), wherein said time interval T between one movement step P and the other is equal to N times the building cycle time Tc.

18. Method according to claim 16 or 17, comprising during the step-wise movement of said plurality of seats (25), in the movement time Tm:
- transiting, one after the other, N seats (25) of said plurality of seats (25) in a pick-up area (24) defined along the active sector (21) of the transport path (20) downstream of the working area (22) with respect to the advancement direction A; and
- picking up N electrochemical cells (30), one after the other, from the N seats (25) transiting in the pick-up area (24).

19. Method according to any one of claims 16 to 18, further comprising:
- moving step-wise a plurality of second seats (125) along a second transport path (120) according to a second advancement direction A2 with a second movement step P2 and according to a second time interval T2 between a second movement step P2 and the other, wherein the second time interval T2 is defined by a second movement time Tm2 and a second stop time Ts2, with T2=T/N; wherein said second seats (125) are equidistant from each other and spaced according to the predetermined spacing step D at least along a second active sector (121) of the second transport path (120) and wherein the second movement step P2 corresponds to the predetermined spacing step D.

20. Method according to claims 18 and 19, further comprising, in the second stop time Ts2, stopping a second seat (125) at a time of said plurality of second seats (125) in a second deposition area (123) along the second active sector (121) of the second transport path (120) and delivering the N electrochemical cells (30) picked up from the N second seats (25) in transit from the pick-up area (24), one at a time, in successive stop times Ts2, to the second seat (125) stopped in the second deposition area (123).
